**Europäisches Patentamt**

**European Patent Office**

**Office européen des brevets**

(19)

(11) Numéro de publication : **0 465 347 A1**

# (12) DEMANDE DE BREVET EUROPEEN

(21) Numéro de dépôt : **91401811.4**

(51) Int. Cl.⁵ : **G01N 17/02**

(22) Date de dépôt : **02.07.91**

(30) Priorité : **02.07.90 FR 9008325**

(43) Date de publication de la demande :
**08.01.92 Bulletin 92/02**

(84) Etats contractants désignés :
**AT BE CH DE ES GB IT LI NL SE**

(71) Demandeur : **TOTAL RAFFINAGE
DISTRIBUTION S.A.
84, rue de Villiers
F-92538 Levallois Perret Cédex (FR)**

(72) Inventeur : **Picaud, Thierry
14, rue Edouard Larue
F-76600 Le Havre (FR)**
Inventeur : **Houlier, Alain
7, rue Guillaume Liard
F-76310 Sainte Adresse (FR)**

(74) Mandataire : **Jolly, Jean-Pierre et al
Cabinet Jolly 54, rue de Clichy
F-75009 Paris (FR)**

(54) **Procédé et dispositif pour l'évaluation de la résistance à la corrosion d'une structure métallique recouverte d'une couche protectrice.**

(57) Le dispositif comprend une cellule de mesure (30) qui peut être posée en contact étanche avec la structure (32), un ensemble générateur (48)-analyseur de fréquences (50) destiné à générer une tension V formée par la superposition d'une tension continue et d'une faible perturbation sinusoïdale et à analyser le courant de réponse I recueilli pour chaque fréquence de la tension sinusoïdale, et un calculateur (60) capable de calculer l'impédance électrochimique $Z = \dfrac{I}{V}$ ainsi que ses composantes résistive R et réactive G.

La cellule de mesure (30) comprend une électrode de travail constituée par la tôle de structure métallique qui et mise à la terre, et une contre-électrode,

— l'analyseur de fréquences (50) est relié à un boîtier électronique (54) connectée à la terre (46) de la structure métallique par un premier câble (56) et à la contre-électrode par un second câble (58).

EP 0 465 347 A1

Jouve, 18, rue Saint-Denis, 75001 PARIS

FIG.5

La présente invention concerne une procédé permettant d'évaluer la résistance à la corrosion d'une structure métallique recouverte d'une couche protectrice, par exemple de peinture.

On sait que la couche de peinture dont on revêt les surfaces métalliques, et particulièrement celles en acier, se détériore au cours du temps sous l'influence des différents facteurs plysiques ou chimiques auxquels la surface est exposée. Dans le cas de très grandes structures métalliques, telles que bacs de stockage de carburant, ponts, édifices, il est très important de disposer d'un moyen permettant de mesurer quantitativement la résistance de la couche de peinture à la corrosion afin d'en déterminer le degré de dégradation et de décider en conséquence du moment où il faut repeindre la structure métallique.

De nombreux procédés de mesure de la résistance à la corrosion d'une tôle métallique peinte ont été utilisés par le passé. Un exemple de procédé connu consiste à immerger en laboratoire un échantillon de la structure métallique peinte dans un brouillard salin et à apprécier la dégradation de la couche de peinture à des intervalles de temps réguliers. Mais la durée d'un tel procédé est très longue, de l'ordre de plusieurs semaines, et les résultats qu'il permet d'obtenir sont imprécis. De plus, on ne peut pas reproduire en laboratoire des conditions atmosphériques identiques à celles qui prévalent sur le terrain. En outre, ce procédé a l'inconvénient de nécessiter de disposer d'une échantillon de la structure et donc d'avoir à détruire une partie de celle-ci ce qui peut être gênant.

Plus récemment, les électrochimistes ont proposé un procédé d'évaluation de la résistance à la corrosion grâce à la mesure de l'impédance en courant alternatif du revêtement de peinture.

Un exemple de ce procédé est décrit dans le brevet U.S. 4 806 849. Il consiste à diviser la surface du revêtement de peinture sur la tôle en une pluralité de petites zones de surface déterminée, à mesurer pour chaque zone l'impédance de l'interface à une fréquence déterminée à travers une solution électrolytique que l'on applique successivement sur lesdites zones et à évaluer le degré de dégradation de la couche de peinture par la distribution statistique des valeurs des impédances mesurées aux différentes zones.

Toutefois, contrairement à ce qu'affirme ce brevet, l'impédance mesurée n'est pas purement électrochimique, mais elle tient compte de tous les paramètres électriques du système électrolytique, tels que la résistance de l'électrolyte, la capacité de la couche de peinture, l'impédance faradique, et la capacité de double couche. l'impédance mesurée par ce procédé correspond donc en réalité à l'impédance globale ésuivalente à toutes ces impédances, de sorte que les résultats auxquels ce procédé conduit ne reflètent pas uniquement le comportement de l'interface vis-à-vis de la corrosion.

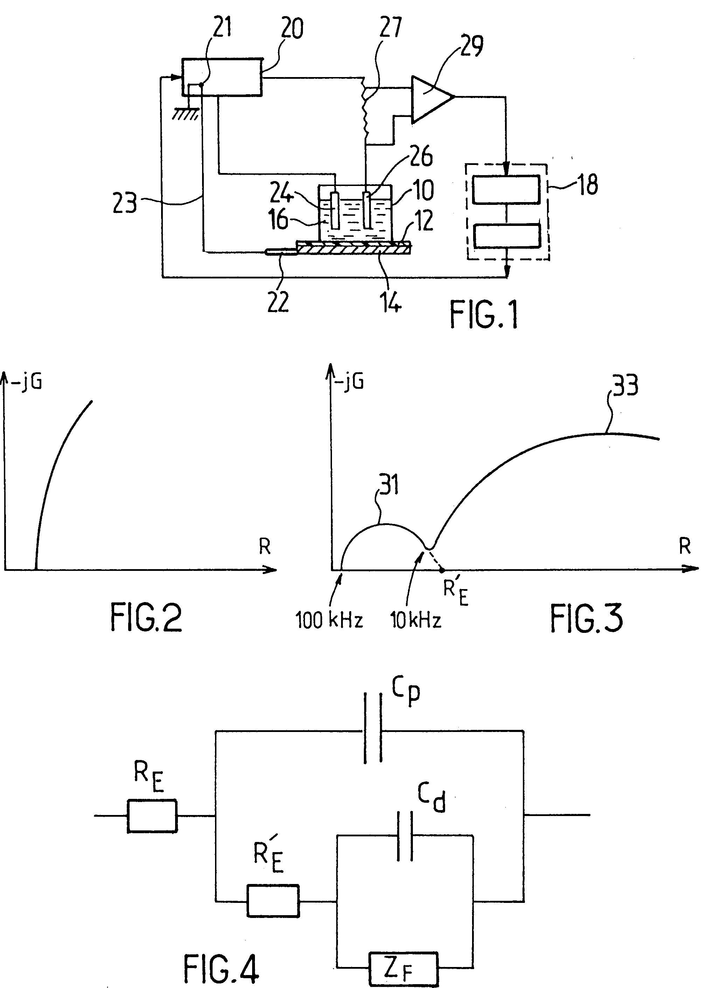

On connaît enfin un procédé utilisé en laboratoire pour évaluer la résistance à la corrosion d'un échantillon de tôle peinte découpé sur une structure métallique, cette évaluation se faisant à partir de la mesure de l'impédance électrochimique avec balayage des fréquences. On peut se reporter pour une description de ce procédé connu à la communication de Th. PICAUD, M. DUPRAT et F. DABOSI : "Application of electrochemical impedance measurements to the study of the corrosion performance of coated steel in 3% NaCl solution". Proceedings International Symposium "Electrochemical Methods in Corrosion Research". TOULOUSE (1985) Edité par M.DUPRAT, MATERIALS SCIENCE FORUM. Vol.8 (1986) p.303 et suivantes. Etant donné que ce procédé sera en partie utilisé dans le cadre de l'invention, on le décrira en détail ci-après en regard des figures 1 à 4 annexées.

La figure 1 représente un dispositif expérimental connu utilisé pour la mesure de ladite impédance électrochimique. Ce dispositif comprend une cuve électrolytique 10 sans fond qui est en contact étanche avec la couche de peinture 12 qui revêt l'échantillon de tôle d'acier 14. La cuve est remplie d'un électrolyte 16 tel qu'une solution de NaCl.

Le dispositif comprend également un ensemble générateur-analyseur de fréquence 18 capable de générer une tension $V = V_0 + \Delta V \sin \omega t$ formée par la surperposition d'une tension continue $V_0$ et d'une tension sinusoïdale de faible amplitude $\Delta V$ et de pulsation $\omega$. Cette tension V est appliquée à un potentiostat 20 ayant une borne à la masse 21. Cette borne est reliée par un conducteur 23 à une électrode de travail 22 constituée par un fil en acier qui est soudé à la tôle 14.

Le dispositif comprend encore une électrode de référence 24 et une contre-électrode 26 reliées au potentiostat. La réponse en courant I est recueillie sur une résistance de mesure 27 montée en série avec la contre-électrode, puis amplifiée par l'amplificateur 29 et analysée par l'analyseur de fréquences 18. Ce courant est de la forme $I = I_0 + \Delta I \sin (\omega t + \varphi)$.

L'impédance électrochimique Z est définie comme étant le module du rapport des variations de la tension sinusoïdale aux variations du courant sinusoïdal

$$Z = \frac{V(j)}{I(j)}$$

$\Delta V$ et $\Delta I$ sont imposés et choisis assez petits pour que leur rapport ne dépende pas du niveau alternatif.

Par suite du déplasage entre le courant et la tension, Z est un nombre complexe que l'on exprime généralement sous la forme

$$Z = R(\omega) - j G(\omega)$$

où R est la partie réelle ou résistive
et G est la partie imaginaire ou réactive.

De façon connue en soi, les mesures recueillies sont introduites dans un calculateur qui trace dans le plan de Nyquist le diagramme G = f (R), paramétré en ω ou en fréquence, la gamme de fréquences exploitée s'étendant de 100 kHz à quelques mHz.

Selon l'état de la couche de peinture, on obtient deux types de diagrammes : le diagramme de la figure 2 qui correspond au cas d'un revêtement intact sous lequel aucune corrosion n'est possible, et celui de la figure 3 qui correspond à un revêtement dégradé. On notera que dans ce dernier cas, le diagramme comprend une boucle haute fréquence 31 suivie d'une boucle basse fréquence 33.

On montre que la boucle haute fréquence représente la partie de la surface où la peinture est intacte, tandis que la partie basse fréquence du diagramme représente les processus faradiques se développant sur le métal nu à travers les pores (discontinuités) du film de peinture. On peut détecter ces discontinuités, d'importance plus ou moires grande, au microscope électronique à balayage.

Les calculs montrent que le prolongement de la boucle haute fréquence coupe l'axe des abscisses en un point d'abscisse $R'_E$ qui est égale à la résistance au passage de l'électrolyte à travers les pores de la couche de peinture dégradée. Sur la figure 4, on a représenté le schéma électrique équivalent du système électrochimique correspondant au diagramme de la figure 3. Sur cette figure :

$R_E$ désigne la résistance de l'électrolyte

$R'_E$ la résistance au passage de l'électrolyte à travers les pores de la couche de peinture.

$C_p$ la capacité de la couche de revêtement

$C_d$ la capacité de double couche

et $Z_F$ l'impédance faradique.

La résistance $R'_E$ traduit fidèlement l'aptitude de la couche protectrice à résister à la corrosion, et cela bien mieux que l'impédance à fréquence fixe mesurée selon le brevet U.S. 4 806 849. Plus $R'_E$ est grand plus la couche de peinture a un pouvoir protecteur.

Toutefois, malgré les excellents résultats auxquels il conduit, ce procédé présente plusieurs inconvénients :

– il ne peut être mis en oeuvre qu'au laboratoire. La Demanderesse a tenté d'effectuer les mêmes mesures sur le site-même d'une structure métallique, en l'occurrence un bac de stockage de carburant, mais elle n'a pas retrouvé l'allure de la courbe de la figure 3;

– pour assurer la continuité électrique de l'électrode de travail avec la structure métallique, il serait nécessaire de poncer le revêtement afin d'obtenir un contact franc entre l'électrode de référence et la tôle, mais on mettrait ainsi à nu la tôle.

La présente invention vise à remédier à tous les inconvénients signalés précédemment de la technique antérieure et elle propose à cet effet un dispositif de mesure de la résistance à la corrosion d'une structure métallique quelconque peinte, à partir de la mesure de son impédance électrochimique dans une large gamme de fréquences, ce dispositif pouvant être transporté sur le site-même de la structure métallique et ne nécessitant pas le ponçage de celle-ci.

De façon surprenante, la Demanderesse a découvert que le dispositif décrit précédemment pour la mesure de l'impédance électrochimique en laboratoire sur une échantillon de tôle peut être utilisé directement sur le site de la structure, à condition de lui apporter les deux modifications suivantes :

– l'électrode de référence doit être supprimée,

– le potentiostat doit être modifié pour travailler en mode à deux électrodes ; il doit être relié à la prise de terre de la structure métallique.

Une fois ces modifications effectuées, la Demanderesse a obtenu une courbe G = f (R) qui coïncide parfaitement avec celle relevée au laboratoire sur un échantillon.

L'invention concerne donc un dispositif transportable sur site pour l'évaluation de la résistance à la corrosion d'une structure métallique revêtue d'une couche protectrice, par exemple de peinture, du type comprenant au moins une cellule de mesure constituée par une cuve électrolytique sans fond, qui peut être posée en contact étanche en un point quelconque de la structure et qui est remplie d'un électrolyte, tel qu'une solution de chlorure de sodium, un ensemble générateur-analyseur de fréquences destiné à générer une tension formée par la superposition d'une tension continue et d'une faible perturbation sinusoïdale et à analyser le courant de réponse recueilli pour chaque fréquence de la tension sinusoïdale et un calculateur capable de calculer l'impédance électrochimique $Z : \dfrac{V}{I}$ ainsi que ses composantes résistive R et réactive C et de tracer dans le plan complexe de Nyquist le diagramme paramétré en fréquences G = f (R), le dispositif étant caractérisé en ce que :

– la cellule de mesure ne comprend que deux électrodes, à savoir une électrode de travail qui est constituée par la tôle de la structure métallique, celle-ci étant mise à la terre, et une contre-électrode,

– l'analyseur de fréquences est relié à un boîtier électronique ayant une première borne de sortie qui est reliée à la terre de la structure métallique par un premier câble et une seconde borne de sortie reliée à la contre-électrode par un second câble.

L'invention concerne également un procédé d'évaluation de la résistance de la corrosion d'une structure métallique revêtue d'une couche protectrice, à l'aide du dispositif décrit ci-dessus, ledit procédé étant caractérisé en ce qu'il consiste :

– à poser de façon étanche la cellule de mesure en un point de la structure,

– à remplir la cellule d'électrolyte,

– à appliquer à l'électrode de travail des tensions formées par la superposition d'une tension continue et d'une faible perturbation sinusoïdale, pour des fréquences variant entre 100 kHz et quelques mHz, le courant de réponse obtenu sur la contre-électrode étant traité par l'analyseur de fréquences et par le calculateur, lequel trace dans le plan complexe de Nyquist le diagramme paramétré en fréquences $G = f(R)$,

– et a relever sur ce diagramme la valeur $R'_E$ où le prolongement de la boucle haute fréquence coupe l'axe des abscisses.

Lorsqu'il s'agit de très grandes structures métalliques, on doit mesurer $R'_E$ en plusieurs points répartis sur la surface de la structure. On pourrait pour cela utiliser la même cellule de mesure que l'on placerait successivement aux différents points choisis. Cependant des interventions répétées sur le sommet de la structure sont longues et présentent des risques pour les opérateurs.

Selon l'invention, on remédie à cela en installant en plusieurs points de la structure métallique plusieurs cellules électrochimiques identiques à celle décrite précédemment, les contre-électrodes de ces cellules étant reliées aux bornes de sortie d'un commutateur dont la borne d'entrée est reliée par un unique câble à l'ensemble générateur-analyseur de fréquences. Le commutateur est commandé à distance pour mettre en service les cellules l'une après l'autre.

Avantageusement, le commutateur est alimenté en tension continue, la commande de la commutation se faisant par superposition de différentes composantes sinusoïdales de différentes fréquences (autant de fréquences que de cellules) ce qui permet de se "caler" sur une cellule donnée. A la fin d'une série de mesures au cours de laquelle on a balayé les fréquences entre quelques MHz et 100 kHz, on envoie cette sur le commutateur, lequel commute automatiquement le dispositif sur la cellule de mesure suivante.

Ainsi, l'opérateur ne doit intervenir que deux fois sur la structure, une fois pour installer les cellules de mesure et le commutateur, et une fois pour les démonter.

Le matériel de commande et de traitement, tel que l'ensemble générateur-analyseur de fréquences, le calculateur et le boîtier électronique peuvent avantageusement être installés sur un véhicule aménagé pour les recevoir. De ce véhicule ne partent que deux câbles reliés respectivement à la terre de la structure métallique et à la borne d'entrée du commutateur.

Un mode de réalisation de l'invention sera décrit à présent en regard des dessins annexés dans lesquels :

La figure 1 est un schéma d'un dispositif expérimental connu pour la mesure de l'impédance électrochimique d'une tôle revêtue d'une couche de peinture;

La figure 2 montre le diagramme $G = f(R)$ relevé avec le dispositif de la figure 1 lorsque le revêtement est intact;

La figure 3 montre le diagramme $G = f(R)$ relevé lorsque le revêtement est dégradé;

La figure 4 représente le schéma électrique équivalent d'une interface métal revêtu/électrolyte dans le cas où le revêtement est dégradé;

La figure 5 est une vue schématique du dispositif selon l'invention utilisé sur le site d'un bac de stockage de carburant;

La figure 6 montre un détail de la figure 5, en coupe suivant la ligne VI-VI; et

La figure 7 est une vue en plan du bac sur lequel est installé un dispositif selon une variante de réalisation adaptée pour la mesure de l'impédance électrochimique en plusieurs points du bac.

Les figures 1 à 4 ayant déjà été décrites, on passera directement à la description des figures suivantes.

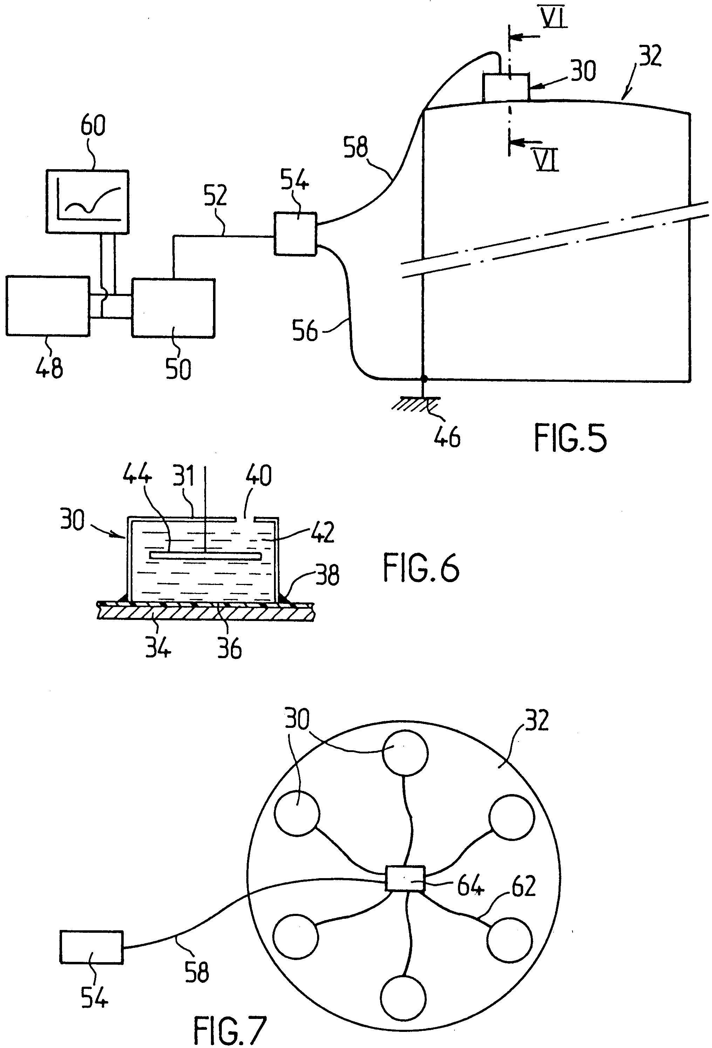

Avec référence aux figures 5 et 6, le dispositif selon l'invention comprend une cellule électrochimique 30 dépourvue de fond. La cellule est posée par son bord libre inférieur sur la surface de la structure métallique à tester. Dans l'exemple illustré, la structure est constituée par un bac de stockage de carburant 32. Ce bac comprend une paroi en acier 34 recouverte d'une couche protectrice de peinture 36. Un joint 38, par exemple en pâte de silicone, assure l'étanchéité le long de la ligne de contact entre le bord inférieur de la cellule 30 et le bac. Une fois le joint mis en place, la cellule est remplie, à travers un orifice 40, d'un électrolyte 42, par exemple une solution de chlorure de sodium à 3%.

Selon une caractéristique importante de l'invention, la cellule est dépourvue d'électrode de référence, contrairement à la cellule selon la technique antérieure représentée à la figure 1. Elle comporte une électrode de travail qui est constituée par la tôle 34 de la structure, et une contre-électrode 44 en métal, par exemple en platine, en acier inoxydable ou en nickel.

Conformément aux normes de sécurité, le bac 32 est relié à une prise de terre 46. L'électrode de travail se trouve donc également mise à la terre.

Il n'est donc plus nécessaire de relier l'électrode de travail à la terre, comme c'est le cas pour le dispositif de la technique connue, illustrée par la figure 2.

Le dispositif selon l'invention comprend également un ensemble générateur 48-analyseur de fréquence 50 susceptible de fournir une tension $V$ constituée par la somme d'une tension continue $V_0$ et d'une faible perturbation sinusoïdale $\Delta V \sin \omega t$. La tension $V$ est appliquée par un conducteur 52 à un boîtier électronique 54 dont les sorties sont respectivement reliées à la prise de terre 46 par l'intermédiaire d'un câble 56 et à la contre-électrode 44 par l'intermédiaire d'un câble 58.

Le courant de réponse 1 est recueilli par la contre-électrode, puis transmis par l'intermédiaire du boîtier électronique 54 à l'analyseur de fréquences 50.

Un calculeur 60 branché sur l'analyseur de fréquences calcule, pour chaque fréquence de la tension V, l'impédance électrochimique et trace la courbe -jG = f(R), comme on l'a expliqué dans le préambule de la description.

Dans le mode de réalisation de la figure 7, on installe sur le bac 32 plusieurs cellules électrochimiques 30 analogues à celle décrite ci-dessus. Les contre-électrodes de ces cellules sont reliées par des conducteurs 62 à un commutateur 64 également posé sur le bac. Ce commutateur est en mode de protection antidéflagrante (ADF).

Le commutateur est relié au boîtier électronique 54 par un câble 58. Le reste du montage est identique à celui de la figure 5.

L'invention a donc permis :

– de réaliser un dispositif d'un maniement facile, puisqu'il peut être transporté sur le site de la structure, et qui fournit une grandeur fiable $R'_E$ directement liée à la résistance à la corrosion du système,

– d'effectuer un contrôle continu en raison de l'utilisation de signaux de faible amplitude : on peut donc, par la considération de l'évolution de la grandeur $R'_E$ avec le temps, étudier la cinétique de dégradation du système revêtu,

– d'apprécier le pouvoir protecteur d'un revêtement donné, et ceci dans n'importe quel milieu électrolytique corrosif ; dans le cas d'un film poreux, la connaissance de $R'_E$ permet de classer le revêtement dans une échelle de niveau de protection ,

– d'étudier l'influence du traitement de surface sur le niveau de protection, la mesure étant avant tout une mesure interfaciale.

## Revendications

1- Dispositif transportable sur site pour l'évaluation de la résistance à la corrosion d'une structure métallique (32) revêtue d'une couche protectrice (36), par exemple de peinture, du type comprenant au moins une cellule de mesure (30) constituée par une cuve électrolytique (31) sans fond, qui peut être posée en contact étanche en un point quelconque de la structure et qui est remplie d'un électrolyte (42), tel qu'une solution de chlorure de sodium, un ensemble générateur (48)-analyseur de fréquences (50) destiné à générer une tension V formée par la superposition d'une tension continue et d'une faible perturbation sinusoïdale et à analyser le courant de réponse I recueilli pour chaque fréquence de la tension sinusoïdale, et un calculateur (60) capable de calculer l'impédance électrochimique $Z = \dfrac{I}{V}$ ainsi que ses composantes résistive R et réactive G et de tracer dans le plan complexe de Nyquist le diagramme paramétré en fréquences G = f (R), le dispositif étant caractérisé en ce que :

– la cellule de mesure (30) ne comprend que deux électrodes, à savoir une électrode de travail (34) qui est constituée par la tôle de structure métallique, celle-ci étant mise à la terre, et une contre-électrode (44),

– l'analyseur de fréquences (50) est relié à un boîtier électronique (54) ayant une première borne de sortie qui est reliée à la terre (46) de la structure métallique par un premier câble (56) et une seconde borne de sortie reliée à la contre-électrode par un second câble (58).

2- Dispositif selon la revendication 1, caractérisé en ce qu'il comprend plusieurs cellules électrochimiques (30) destinées à être posées en plusieurs points de la structure métallique (32), les contre-électrodes de ces cellules étant reliées aux bornes de sortie d'un commutateur (64) dont la borne d'entrée est reliée par un unique câble (58) à l'ensemble générateur-analyseur de fréquences (48,50) via le boîtier électronique (54) et en ce que le commutateur est commandé à distance pour mettre en service les cellules l'une après l'autre.

3- Dispositif selon la revendication 2, caractérisé en ce que la commutation est commandée en appliquant au commutateur une tension de fréquence nettement supérieure à celles appliquées pour la mesure de l'impédance électrochimique.

4- Dispositif selon l'une des revendications précédentes, caractérisé en ce que l'ensemble générateur-analyseur de fréquences (48,50), le calculateur (60) et le boîtier électronique (54) sont montés sur un véhicule d'où partent les deux câbles (56,58).

5- Procédé d'évaluation de la résistance à la corrosion d'une structure métallique revêtue d'une couche protectrice, à l'aide du dispositif selon l'une des revendications précédentes, caractérisé en ce qu'il consiste :

– à poser de façon étanche plusieurs cellules de mesure (30) en plusieurs points de la structure,

– à remplir la cellule d'électrolyte,

– à appliquer à l'électrode de travail (34) des tensions formées par la superposition d'une tension continue et d'une faible perturbation sinusoïdale, pour des fréquences variant entre 100 kHz et quelques mHz, le courant de réponse obtenu sur la contre-électrode étant traité par l'analyseur de fréquences (50) et par le calculateur (60), lequel trace dans le plan complexe de Nyquist le diagramme paramétré en fréquences G = f (R),

– à relever sur ce diagramme la valeur $R'_E$ où le prolongement de la boucle haute fréquence (31) coupe l'axe des abscisses.

6- Procédé selon la revendication 5, caractérisé en ce qu'il consiste :

– à envoyer une impulsion de fréquence élevée sur le commutateur (64) afin de le commuter sur une autre cellule électrolytique,

– et à refaire toutes ces opérations sur la nouvelle cellule.

FIG.1

FIG.2

FIG.3

FIG.4

FIG.5

FIG.6

FIG.7

**Office européen des brevets**

# RAPPORT DE RECHERCHE EUROPEENNE

Numero de la demande

EP 91 40 1811

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | US-A-4 806 849 (KIHIRA)<br>* Le document en entier *<br>--- | 1,2,5,6 | G 01 N 17/02 |
| D,A | ELECTROCHEMICAL METHODS IN CORROSION RESEARCH; MATERIALS SCIENCE FORUM, vol. 8, 1986, pages 303-314, Switzerland, CH; T. PICAUD et al.: "Application of electrochemical impedance measurements to the study of the corrosion performance of coated steel in 3% NaCl solution"<br>* Le document en entier *<br>--- | 1,5 | |
| A | DE-B-1 145 392 (FORD-WERKE)<br>* Colonne 2, ligne 30 - colonne 3, ligne 21; figures *<br>--- | 1 | |
| A | GB-A-1 021 922 (WILMOT-BREEDON)<br>* Page 1, lignes 8-70; figures 1,2 *<br>--- | 1 | |
| A | EP-A-0 088 523 (GENERAL MOTORS)<br>* Page 4, ligne 32 - page 6, ligne 13; abrégé; figure 1 *<br>----- | 1 | **DOMAINES TECHNIQUES RECHERCHES (Int. Cl.5)**<br><br>G 01 N |

Le présent rapport a été établi pour toutes les revendications

| Lieu de la recherche | Date d'achèvement de la recherche | Examinateur |
|---|---|---|
| LA HAYE | 22-08-1991 | BOSMA R.A.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant